# EUROPÄISCHE PATENTSCHRIFT

(11) **EP 0 388 740 B1**
(45) Veröffentlichungstag und Bekanntmachung des Hinweises auf die Patenterteilung: **10.08.1994**
(21) Anmeldenummer: 90104566.6
(22) Anmeldetag: 10.03.1990
(51) Int. Cl.: B41N 10/02

(54) **Trägerhülse, insbesondere für den Offsetzylinder einer Rotationsdruckmaschine**
Shell for offset-cylinder for rotary machines
Manchon, pour cylindre offset pour rotative

(30) Priorität: 18.03.1989 DE 3908999
(43) Veröffentlichungstag der Anmeldung: 26.09.1990
(73) Patentinhaber: M.A.N.-ROLAND Druckmaschinen Aktiengesellschaft, 63012 Offenbach (DE)
(72) Erfinder: Tittgemeyer, Udo, D-5760 Arnsberg 2 (DE)

(56) Entgegenhaltungen:
- EP-A- 0 008 760
- US-A- 1 804 139
- US-A- 3 622 412

## Beschreibung

Die Erfindung betrifft eine beschichtete Trägerhülse, insbesondere für den Offsetzylinder einer Rotationsdruckmaschine, und ein Verfahren zu dessen Herstellung.

Aus der Offenlegungsschrift 27 08 689 ist es bereits bekannt, bei einer Endlos-Offsetdruckmaschine eine beschichtete auswechselbare Trägerhülse gemäß vorangehend bezeichneter Gattung zu verwenden. Für die Beschichtung werden elastische Materialien verwendet.

Wie das Fachbuch von "Walenski", Seiten 262 und 263 zeigt, werden auch bei herkömmlichen Offset-Rotationsdruckmaschinen u.a. Gummitücher verwendet, die zwar elastisch verformbar, aber nicht volumenkompressibel sind. Man spricht von sogenannten "inkompressiblen Gummitüchern". Der Grund liegt darin, daß lediglich gasförmige Stoffe nennenswerte volumenkompressible Eigenschaften aufweisen, hingegen flüssige und feste Stoffe nicht. Dieser bekannte Stand der Technik zeigt jedoch auch Gummitücher mit Zwischengummierungen aus mikrokompressiblen Schichten, die durch Luftkanäle miteinander verbunden sind, jedoch haben derartige Materialien noch keine Anwendung bei Offset-Übertragungshülsen gefunden. Bei diesen macht sich die Verwendung herkömmlicher, d.h. lediglich elastischer, aber nicht volumenkompressibler Materialien besonders nachteilig bemerkbar, da im Gegensatz zu den mit Zylindergruben versehenen Offsetzylindern bei den Trägerhülsen mit durchgehender, d.h. ununterbrochener Beschichtung keine Entspannung des sich bildenden Wulstes stattfindet, so daß der praktische Einsatz von beschichteten Trägerhülsen, zumindest auf breiter Basis, bisher nicht möglich war, weder als kompakte, elastomere Hülse, noch als elastomer beschichtete Hülse, und schon gar nicht als Schaum.

Hinzu kommt, daß es sich bei den bisher verwendeten Materialien um sogenannte formgeschäumte Stoffe handelt, beispielsweise "gegossenes Polyurethan". Auch aus diesem Grunde war die Verwendung der bisher bekannten volumenkompressiblen Materialien kaum oder zumindest nicht wirtschaftlich möglich.

Aufgabe der vorliegenden Erfindung ist es deshalb, eine beschichtete zylindrische Trägerhülse und ein Verfahren zu deren Herstellung aufzuzeigen, die die Nachteile bekannter Beschichtungen und Druckübertragungsträger nicht aufweist und die neben einer wirtschafltichen Herstellung ein günstigeres Abroll- und Druckverhalten bei verbesserter Druckqualität ermöglicht, wobei die Beschichtung eine geringe Dämpfung und hohe Rückprallelastizität aufweisen soll. Diese Aufgabe wird durch die Anwendung der kennzeichnenden Merkmale der Ansprüche 1 oder 2 gelöst. Vorteilhafte Weiterbildungen ergeben sich aus den Unteransprüchen und aus der Beschreibung in Verbindung mit der Skizze.

Gemäß der Erfindung werden die Mikrozellen nicht von außen eingebracht, sondern sie sind materialimmanent.

Schematisch ist in der Skizze zur Erläuterung eines Ausführungsbeispiels ein Offset-Zylinder 1 dargestellt, wie er in Rotationsdruckmaschinen zur Übertragung eines Bildes von einer eingefärbten Druckform auf einen Bedruckstoff verwendbar ist. Bekanntlich werden derartige Zylinder beidseitig im Druckmaschinengestell gelagert. Dieser Zylinder 1 umfaßt eine auswechselbare Hülse 2, auf der eine volumenkompressible Beschichtung 3 vorgesehen ist. In einem besonderen Ausführungsbeispiel kann die volumenkompressible Beschichtung 3 mit einer Deckschicht 4 versehen werden. Als Trägerhülse 2 auf dem zylinderischen Körper 1 kann beispielsweise eine Kunststoffhülse verwendet werden, die kohlefaserverstärkt sein kann oder ein metallisches Rohr, beispielsweise aus Aluminium. Die Wandstärke liegt (je nach Material) vorzugsweise zwischen 0,02 und 0,3 mm. Als Ausgangsmaterial wird für die volumenkompressible Schicht 3, die die Basisschicht darstellt, ein auf Polyol basierendes Material wie z.B. Polyurethan oder ein auf Silikon basierendes Material verwendet, wobei die Schicht 3 eine Dicke aufweist, die vorzugsweise zwischen 1 und 5 mm liegt, die aber auch andere Werte aufweisen kann. Gegebenenfalls kann auf der volumenkompressiblen Basisschicht 3 eine Deckschicht 4 angeordnet werden, die nicht volumenkompressibel ist und beispielsweise aus auf Polyurethan basierendem Material besteht oder aus auf Kautschuk basierendem Material. Die Stärke der Deckschicht kann nur wenige 1/100 mm, also < 0,5 mm betragen. Die Materialien zur Erzeugung der volumenkompressiblen Basisschicht 3 sind exotherm durch Polyaddition vernetzende Materialien, d.h. sie geben bei der Vernetzung Wärme ab.

Die Basisschicht 3 sollte gemäß der Erfindung mit Mikrozellen vorzugsweise < 1/100 mm hergestellt werden, wobei die Volumenanteile der Zellen größer als 50 % sein sollen und vorzugsweise ihre Häufigkeit nach außen hin zunimmt. Die volumenkompressible Schicht weist eine Dichte zwischen 0,30 g/cm³ bis 0,60 g/cm³ auf und die Steigzeit des Materials der volumenkompressiblen Schicht 3 liegt zwischen 2 und 15 Sekunden. Der Anteil, der sich bei der Herstellung bildenden geschlossenen Zellen, sollte größer sein als der Anteil der offenen Zellen, d.h. derjenigen Zellen, die untereinander über Kanäle verbunden sind, beziehungsweise ausmünden.

Der Kontaktanteil der kompakten Deckschicht 4 auf dem Schichtaufbau gemessen, ist vorzugsweise größer als 50 % und die Dämpfung der volumenkompressiblen Schicht 3 kleiner als 25 %. Die volumenkompressible Schicht 3 ermöglicht in vorteilhafter Weise die Berücksichtigung von Federkennlinien durch den Druckeinsatz, wobei aus dem Kennlinienfeld Flächenpressung, Drucklinienbreite und Zustellweg ermittelt werden können. Die Größe der Zellen sollte kleiner als 1/100 mm betragen und das Verhältnis Zellvolumen: Wandstärke bei > 1,5:1 liegen, vorzugsweise 2,5 : 1. Die Rückprallelastizität beträgt mehr als 95 % und der Druckverformungsrest ist kleiner als 5 %, vorzugsweise kleiner als 2 %.

Ein besonderer Vorteil der erfindungsgemäßen Übertragungshülse liegt darin, daß der Aufbau über die gesamte Aufbaudicke volumenkompressibel ist.

Ein besonders geeignetes Verfahren zur Herstellung der erfindungsgemäßen Übertragungshülse besteht darin, daß die Basismaterialien thixotropiert werden, beispielsweise durch auf Polyol basierendem Material mit Kieselsäure, so daß die in einem Behälter als Gel vorliegenden Materialien durch Rühren dünnflüssig werden, wobei infolge der thixotropen Eigenschaften nach dem Rühren wieder der Gel-Zustand auftritt. Darüber hinaus läßt sich das Material füllen, verdicken und verstärken, beispielsweise mit Kreide oder Talkum, zur Erhöhung der Konsistenz. In erfindungsgemäßer Weise ist es somit möglich, die zur Erzeugung der volumenkompressiblen Schicht eingesetzten Materialien flüssig auf einen die Übertragungsform bildende Körper aufzubringen, und zwar vorzugsweise unter Drehung und eines Vorschubes der Trägerhülse, so daß sich das Material spiralförmig in flüssiger Form aufbringen läßt und noch verfließen kann, so, daß sich keine Wulst und keine freien Stellen bilden.

Danach wird das Material wieder fest. Durch Einsatz geeigneter Härter kann dieser Prozeß gesteuert werden.

Die Erfindung vermittelt also auch ganz allgemein die technische Lehre, eine zylindrische Trägerhülse für Rotationsdruckmaschinen, insbesondere Offset-Maschinen, zu schaffen, die eine geschlossene (nahtlose) Mantelbeschichtung aus Kunststoff aufweist, der nicht untereinander verbundene Mikrozellen enthält. Bevorzugt wird hierfür das vorangehend offenbarte Verfahren vorgeschlagen.

Im Gegensatz zu den bekannten Verfahren ergibt sich somit im Rahmen der Erfindung die Möglichkeit, eine volumenkompressible Schicht auch frei geschäumt aufzubringen, d.h. es ist keine Gießform erforderlich, wie bei dem bekannten Verfahren. Durch den Einsatz von Treibmitteln und Inhibitoren können die Eigenschaften gemäß vorangehenden Angaben unter entsprechendem Rühren und den Zusatz von Härtern beeinflußt werden, so daß die gewünschte Größe und Anzahl der Mikrozellen bestimmt werden kann. Die verwendeten Härter haben Einfluß auf die Ruhezeit, die vorzugsweise zwischen zwei und zehn Sekunden liegt. Durch die Treibmittel und Inhibitoren (Aktivatoren) initiiert bilden sich geschlossene oder offene Zellen, so daß ein elastomerer Schaum entsteht, dessen Volumen, Kompaktheit, Zellgröße, Zellwände und Zellanteile in weiten Grenzen durch Versuche einstellbar ist.

Inhibitoren sind bekanntlich Aktivatoren mit indirekter Wirkung, beispielsweise tertiäre Amine. Sie verändern die Grundeigenschaften der verwendeten Basismaterialien entsprechend den gewünschten Bedingungen. Die Treibmittel sind Stoffe, die selbst vergasen, z.B. Methylenchlorid. Die Deckschicht kann in herkömmlicher Weise aufgebracht werden oder ebenfalls unter Anwendung des vorangehend beschriebenen Prinzips.

Wie bereits erwähnt, wird die Zellgröße entscheidend durch die Rührenergie und -geschwindigkeit während des Materialansatzes beeinflußt, wohingegen die Verteilung der Räume innerhalb der Schichtstärke in zeitlicher Abhängigkeit von der Austragzeit, der Steigzeit, der Drehzahl und Aushärtungszeit bestimmt wird. Für die zweite Deckschicht ist besonders ein kompaktes Elastomer geeignet, dessen Oberfläche als Feinstschicht mit den benötigten Rauhtiefen beziehungsweise Glätten herzustellen ist. Die Deckschicht sollte < 0,5 mm dick sein und kann an sich aus beliebigem Material, wie Kautschuk oder Silikon oder Polyurethan bestehen.

Die Vorteile der erfindungsgemäßen Übertragungshülse zeigen sich nicht nur auf der maschinenbaulichen Seite, sondern auch auf der drucktechnischen Seite. Darüber hinaus sind diese kostengünstig herzustellen.

Unter anderem unterliegen die erfindungsgemäß hergestellten nahtlosen Übertragungshülsen nicht mehr strapaziösen wechselseitigen Druck- und Zug-Belastungen, was die Ausdruckqualität, den Passer und die Leistung fördert und einen schonenden Papierlauf ermöglicht. Es ergibt sich zudem eine reduzierte Antriebsleistung für die Maschine. Der Maschinenzylinder zur Aufnahme der Übertragungsträger muß nicht massiv sein, wie dies heute der Fall ist. Das erfindungsgemäße volumenkompressible Material "walkt nicht", so daß all die damit verbundenen Probleme eliminiert sind.

In drucktechnischer Hinsicht ergibt sich des weiteren, daß sich die Drucklinie allein in die Schichtdicke des Übertragungsträgermaterials drückt, ohne sich zu verbreitern, da kein Material verdrängt wird und dies bei einem kanallosen Druck. Dadurch wird der Druckpunkt in seiner exakten Größe von der Platte auf den Übertragungszylinder übernommen und genau so an den Bedruckstoff übergeben. Das Einfederungsverhalten, also die Kompression und die Rückstellung sind ein gasdynamischer Prozeß, bei dem keine nennenswerte Temperatur frei werden kann, da Erwärmung durch Kompression und Kälteentstehung bei Entspannung naturgemäß sich die Waage halten.

Durch die wesentlich geringeren mechanischen Strapazen, d.h. das Entfallen des Walkens, des Schiebens und des Spannens in Verbindung mit dem hier vorliegenden ohnehin hochverschleißfesten Material ergeben sich hohe Standzeiten.

Hinsichtlich der kostengünstigen Herstellung ergeben sich die Vorteile daraus, daß sich eine runde Geometrie leichter bearbeiten läßt und die Form und Lage vorher bekannt ist, im Gegensatz zu gespannten Gummitüchern. Die Größe ist vorbestimmbar, weil sich das Material derart beeinflußen läßt, daß das Verhalten der Schicht beim Druck determinierbar ist. Die Kostengünstigkeit basiert auch darauf, daß das Material exotherm aushärtet, also im Gegensatz zur heutigen Vulkanisierung keine Wärme zugeführt werden muß und weil keine Gegenform benötigt wird, wie beispielsweise bei den der Herstellung allgemein bekannten Polyurethanwalzen, die mit kompaktem Material zwischen Form und Gegenform gegossen werden.

Die Erfindung betrifft insbesondere zylindrische Trägerhülsen, also beschichtete Hülsen, die anstelle herkömmlicher Gummitücher (formatbegrenzend) Druckbilder aufnehmen und diese auf einen Bedruckstoff weitergeben können (Offset), jedoch kann die erfindungsgemäße Beschichtung auch auf sonstigen zylindrischen Körpern, z.B. Walzen, aufgebracht werden und zwar für das gleiche Einsatzgebiet (zylindrische Bildübertragung) oder für andere Zwecke (z.B. Farbwalzen für Druckmaschinen).

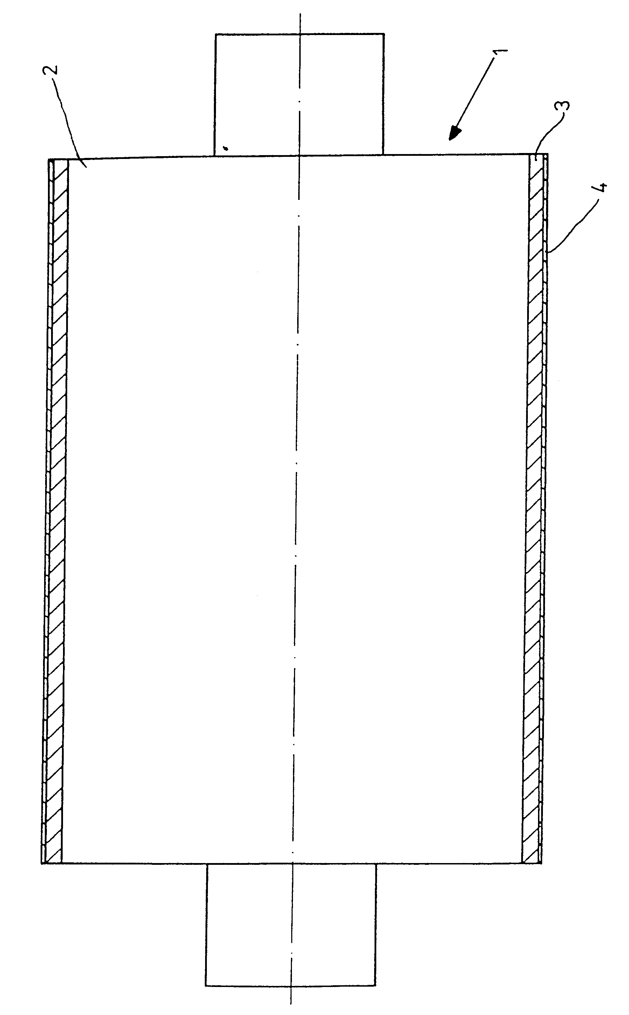

## Patentansprüche

1. Zylindrische Trägerhülse (2) mit einer auf dieser angeordneten nahtlosen Beschichtung (3), insbesondere zum Aufbringen auf einen Offset-Zylinder (1) einer Rotationsdruckmaschine, dadurch gekennzeichnet, daß die Beschichtung (3) aus einem Mehrkomponentenmaterial besteht, das in Form eines mit Treibmitteln und Inhibitoren versetzten Schaumes auf die Trägerhülse (2) freigeschäumt aufbringbar ist, so daß das Material während der Aufbringung volumenkompressibel wird.

2. Verfahren zur Herstellung der Trägerhülse (2) nach Anspruch 1, dadurch gekennzeichnet, daß das Material zur Herstellung der Beschichtung (3) thixotropiert wird, so daß es in flüssiger Form auf die Trägerhülse (2) unter Drehung und Vorschub derselben etwa spiralförmig aufbringbar ist, in der Weise, daß es noch zu verfließen vermag.

3. Verfahren nach Anspruch 2, dadurch gekennzeichnet, daß das auf die Trägerhülse (2) aufgebrachte Material durch Zusatz von Treibmittel und Inhibitoren in der Weise aufgeschäumt wird, daß geschlossene Mikrozellen kleiner als 1/100 mm entstehen und sich ein Verhältnis zwischen Zellvolumen zu Wandstärke von > 1,5:1 ergibt, wobei die Anzahl der geschlossenen Zellen größer als 50 % im Verhältnis zu den offenen Zellen ist.

4. Verfahren nach einem der Ansprüche 2 bis 3, dadurch gekennzeichnet, daß die volumenkompressible Beschichtung (3) eine Dichte von 0,30 g/cm³ bis 0,65 g/cm³ aufweist.

5. Verfahren nach einem der Ansprüche 2 bis 4, dadurch gekennzeichnet, daß als Materialien für die volumenkompressible Beschichtung (3) ein auf Polyol basierendes Material, oder ein auf Polyurethan basierendes Material oder ein auf Silikon basierendes Material verwendet werden, die exotherm durch Polyaddition vernetzend sind.

6. Verfahren nach einem der vorangehenden Ansprüche 2 bis 5, dadurch gekennzeichnet, daß auf die volumenkompressible Beschichtung (3) eine Deckschicht (4) aufgebracht wird.

7. Verfahren nach Anspruch 6, dadurch gekennzeichnet, daß als Deckschicht (4) ein auf Polyurethan basierendes Material oder auf Kautschuk basierendes Material verwendet wird.

8. Verfahren nach Anspruch 6 und 7, dadurch gekennzeichnet, daß die Deckschicht (4) mit einer Dicke von < 0,5 mm hergestellt wird.

9. Verfahren nach einem der vorangehenden Ansprüche 2 bis 7, dadurch gekennzeichnet, daß die volumenkompressible Schicht (3) mit einer Dicke zwischen 1 bis 5 mm hergestellt wird.

10. Verfahren nach einem der vorangehenden Ansprüche, dadurch gekennzeichnet, daß die Trägerhülse (2) aus Kunststoff oder aus Metall besteht und eine Wandstärke zwischen 0,02 bis 0,3 mm aufweist.

11. Verfahren nach einem der vorangehenden Ansprüche, dadurch gekennzeichnet, daß die Dämpfung der volumenkompressiblen Schicht (3) kleiner als 25 % ist.

12. Verfahren nach einem der vorangehenden Ansprüche, dadurch gekennzeichnet, daß die Rückprallelastizität > 95 % und/oder der Druckverformungsrest < 5 % sind.

13. Zylindrische Trägerhülse (2) für Rotationsdruckmaschinen mit einer geschlossenen Mantelbeschichtung aus Kunststoff, der nicht untereinander verbundene Mikrozellen aufweist und der insbesondere nach einem der Ansprüche 2 bis 11 hergestellt wurde.

14. Walze oder Zylinder, dadurch gekennzeichnet, daß auf diesen eine Beschichtung (3) gemäß einem der Ansprüche 1 bis 12 aufgebracht ist.

## Claims

1. Cylindrical carrier sleeve (2) having a seamless coating (3) disposed thereon, in particular for application onto an offset cylinder (1) of a rotary printing machine, characterised in that the coating (3) comprises a multi-component material which can be applied freely-foamed onto the carrier sleeve (2) in the form of a foam mixed with propellants and inhibitors so that the material becomes volume-compressible during application.

2. Process for the production of the carrier sleeve (2) according to claim 1, characterised in that the material for producing the coating (3) is made thixotropic so that it can be applied more or less spirally in liquid form to the carrier sleeve (2), rotating the sleeve and moving it forward, in such a way that it can still flow.

3. Process according to claim 2, characterised in that material applied to the carrier sleeve (2) is foamed by the addition of propellants and inhibitors in such a way that closed microcells smaller than 1/100 mm are produced resulting in a ratio between cell volume and wall thickness of > 1.5:1, the number of closed cells being greater than 50% in proportion to the open cells.

4. Process according to one of claims 2 to 3, characterised in that the volume-compressible coating (3) has a density of from 0.30 g/cm³ to 0.65 g/cm³.

5. Process according to one of claims 2 to 4, characterised in that materials used for the volume-compressible coating (3) are a polyol-based material or a polyurethane-based material or a silicone-based material which crosslink exothermically by polyaddition.

6. Process according to one of the preceding claims 2 to 5, characterised in that a cover layer (4) is applied to the volume-compressible coating (3).

7. Process according to claim 6, characterised in that a polyurethane-based material or a rubber-based material is used as the cover layer (4).

8. Process according to claim 6 and 7, characterised in that the cover layer (4) is produced with a density of < 0.5 mm.

9. Process according to one of the preceding claims 2 to 7, characterised in that the volume-compressible layer (3) is produced with a thickness of between 1 and 5 mm.

10. Process according to one of the preceding claims, characterised in that the carrier sleeve (2) is made of plastic or metal and has a wall thickness of between 0.02 to 0.3 mm.

11. Process according to one of the preceding claims, characterised in that the attenuation of the volume-compressible layer (3) is less than 25%.

12. Process according to one of the preceding claims, characterised in that the rebound elasticity is > 95% and/or the residual compression deformation is < 5%.

13. Cylindrical carrier sleeve (2) for rotary printing machines having a closed surface coating of plastic material which has microcells which are not joined together and which was produced in particular according to one of claims 2 to 11.

14. Roller or cylinder, characterised in that a coating (3) is applied to it in accordance with one of claims 1 to 12.

## Revendications

1. Manchon porteur cylindrique (2) comprenant un revêtement (3) sans joint disposé sur ce manchon, notamment destiné à être monté sur un cylindre d'offset (1) d'une machine à imprimer rotative, caractérisé en ce que le revêtement (3) est composé d'une matière à plusieurs composants qui peut être appliquée, en moussage libre sur le manchon porteur (2) sous la forme d'une mousse additionnée d'agents gonflants et d'inhibiteurs, de sorte que la matière devient compressible en volume pendant son application.

2. Procédé de fabrication du manchon porteur (2) selon la revendication 1, caractérisé en ce que la matière est rendue thixotropique pour la fabrication du revêtement (3), de sorte qu'elle peut être déposée à peu près en hélice sous la forme liquide sur le manchon porteur (2) avec rotation et avance de ce dernier, de telle manière qu'elle puisse encore fluer.

3. Procédé selon la revendication 2, caractérisé en ce que la matière déposée sur le manchon porteur (2) est moussée par addition d'agents gonflants et d'inhibiteurs de telle manière qu'il se forme des microcellules fermées de dimension inférieure à 1/100 mm et qu'il s'établit un rapport entre le volume des cellules et l'épaisseur de paroi de > 1,5 : 1, le nombre des cellules fermées étant supérieur à 50 % dans leur rapport avec les cellules ouvertes.

4. Procédé selon une des revendications 2 à 3, caractérisé en ce que le revêtement (3) compressible en volume possède une densité de 0,30 g/cm³ à 0,65 g/cm³.

5. Procédé selon une des revendications 2 à 4, caractérisé en ce qu'on utilise comme matières pour le revêtement (3) compressible en volume une matière à base de polyol ou une matière à base de polyuréthane ou une matière à base de silicone, qui se réticule par polyaddition dans une réaction exothermique.

6. Procédé selon une des revendications précédentes 2 à 5, caractérisé en ce qu'on dépose une couche de recouvrement (4) sur le revêtement (3) compressible en volume.

7. Procédé selon la revendication 6, caractérisé en ce qu'on utilise comme couche de recouvrement (4) une matière à base de polyuréthane ou une matière à base de caoutchouc.

8. Procédé selon la revendication 6 ou 7, caractérisé en ce que la couche de recouvrement (4) est produite sour une épaisseur de < 0,5 mm.

9. Procédé selon une des revendications 2 à 7, caractérisé en ce que la couche (3) compressible en volume est produite sous une épaisseur comprise entre 1 et 5 mm.

10. Procédé selon une des revendications précédentes, caractérisé en ce que la manchon porteur (2) est fait d'une matière plastique ou de métal et possède une épaisseur de paroi d'entre 0,02 et 0,3 mm.

11. Procédé selon une des revendications précédentes, caractérisé en ce que l'amortissement de la couche (3) compressible en volume est inférieur à 25 %.

12. Procédé selon une des revendications précédentes, caractérisé en ce que l'élasticité de rebondissement est > 95 % et/ou la déformation résiduelle après compression est de < 5 %.

13. Manchon porteur cylindrique (2) pour machines à imprimer rotatives, comprenant un revêtement de paroi latérale fermé en matière plastique qui présente des microcellules qui ne communiquent pas entre elles et qui a été produit en particulier selon une des revendications 2 à 11.

14. Rouleau ou cylindre, caractérisé en ce qu'un revêtement (3) selon une des revendications 1 à 12 est déposé sur ce rouleau ou cylindre.
